# EUROPÄISCHE PATENTSCHRIFT

(11) **EP 2 709 858 B1**
(45) Veröffentlichungstag und Bekanntmachung des Hinweises auf die Patenterteilung: **03.12.2014**
(21) Anmeldenummer: 12721482.3
(22) Anmeldetag: 09.05.2012
(51) Int. Cl.: B60G 7/00, B62D 29/00, B62D 25/00, B62D 25/20, B62D 21/11

(54) **TRÄGER ALS FAHRWERKKOMPONENTE**
CARRIER USED AS A CHASSIS COMPONENT
LONGERON SERVANT DE COMPOSANT DE CHÂSSIS

(30) Priorität: 17.05.2011 DE 202011050158 U
(43) Veröffentlichungstag der Anmeldung: 26.03.2014
(73) Patentinhaber: Kirchhoff Automotive Deutschland GmbH, 57439 Attendorn (DE)
(72) Erfinder: FRANZPÖTTER, Thorsten, 57439 Attendorn (DE); LAGIN, Stephan, 57439 Attendorn (DE)
(74) Vertreter: Haverkamp, Jens
(86) Internationale Anmeldenummer: PCT/EP2012/058545
(87) Internationale Veröffentlichungsnummer: WO 2012/156248

(56) Entgegenhaltungen:
- EP-A2- 1 052 162
- DE-A1- 10 238 668
- DE-A1- 19 827 549
- US-A1- 2006 005 503
- US-B1- 6 168 226
- US-B1- 6 287 666
- US-B1- 7 392 929

## Beschreibung

Die Erfindung betrifft einen Träger als Fahrzeugkomponente mit einer Längserstreckung, die einem Mehrfachen seiner Quererstreckung entspricht, und mit einer den Träger versteifenden Querprofilierung, durch die der Träger eine im Wesentlichen U-förmige Querschnittsgeometrie aufweist.

In Fahrzeugen werden unterschiedliche Träger als Fahrzeugkomponenten eingesetzt. Bei derartigen Trägern kann es sich beispielsweise um solche handeln, die im eigentlichen Sinne als Träger zum Tragen bestimmter Komponenten dienen. Ein derartiger Träger ist beispielsweise ein Getriebeträger. Träger werden als Fahrzeugkomponente auch in einer Funktion eingesetzt, bei der diese zum Verbinden, insbesondere auch zum gelenkigen Verbinden von Fahrzeugkomponenten eingesetzt werden. Dieses ist beispielsweise beim Fahrwerk der Fall. Als Träger im Sinne dieser Ausführungen werden dort beispielsweise Lenker, etwa Querlenker oder Stabilisatoren eingesetzt.

Träger der vorgenannten Art können als Stahlblechkomponenten gefertigt sein. Diese Träger verfügen zum Erhöhen ihrer Steifigkeit über eine Querprofilierung, sind mithin quer zu ihrer Längserstreckung profiliert. Die Profilierung ist typischerweise als U-förmige Profilierung ausgeführt. Die Längserstreckung dieser Träger entspricht einem Mehrfachen seiner Quererstreckung. In bestimmten Ausgestaltungen können auch zwei oder mehrere derartige Träger zu einer Fahrzeugkomponente zusammengesetzt sein. Dieses ist beispielsweise bei einem Getriebeträger der vorbekannten Art der Fall, bei dem zwei U-förmig profilierte Träger zur Ausbildung eines geschlossenen Kastenprofiles miteinander verschweißt werden.

Hergestellt werden derartige Träger aus dem Werkstoff Stahl im Wege eines Umformprozesses, zumeist eines Tiefziehprozesses, durch den ein Blechrohling in die dreidimensionale Geometrie des Trägers umgeformt wird. Der diesbezügliche Werkzeugaufwand ist nicht unbeträchtlich. Ein zum Herstellen eines Trägers eingerichtetes Werkzeug ist nicht nur exakt auf die zu erstellende Geometrie des Trägers, sondern auch auf die Stärke des umzuformenden Blechrohlings abgestellt.

Auch wenn Träger der vorgenannten Art den an diese gestellten Anforderungen genügen, besteht dennoch der Wunsch nach biegesteiferen Trägern, vor allem solchen, die sich mit nur relativ geringen Mehrkosten und einem vertretbarem Maß an erhöhtem Fertigungsaufwand realisieren lassen.

Der Erfindung liegt daher die Aufgabe zugrunde, einen solchen Träger vorzuschlagen.

Die US 6,287,666 B1 offenbart ein kanalförmiges Element, das lokal durch ein Verstärkungselement unterstützt wird. Hierbei ist ein zwischen den Elementen gegebener Zwischenraum wenigstens teilweise ausgeschäumt. Das Verstärkungselement weist im Querschnitt eine Wölbung auf, die in Richtung einer erwarteten Krafteinwirkung weist.

Die US 6,168,226 B1 zeigt ein gestrecktes Stützteil mit einem äußeren Strukturteil und einem inneren Teil, zwischen denen ein Kanal definiert ist. Die Außenfläche des inneren Teils wird vorab mit einem aufschäumenden Material beschichtet, das nach Zusammenfügen der beiden Teile unter Wärmeeinwirkung aufgeschäumt wird.

Die DE 102 38 668 A1 betrifft einen Profilrahmenträger für Kraftfahrzeugkarosserien, mit zwei miteinander verbundenen Elementen. Eines der Elemente ist dabei doppelwandig ausgeführt und der zwischen den Wänden liegenden Raum ist mit einem Schaumwerkstoff gefüllt. Das doppelwandige Teil kann insbesondere einen U-förmigen Querschnitt aufweisen.

Die US 2006/005503 A1 offenbart ein Strukturelement für einen Fahrzeugkörper, mit einem langgestreckten Stützelement, das einen inneren Hohlraum aufweist, sowie einen Verstärkungseinsatz, der in den Hohlraum eingesetzt ist. Der Querschnitt des Verstärkungseinsatzes definiert seinerseits einen weiteren Hohlraum, wodurch Kompressionskräften auf das Stützelement entgegengewirkt werden soll. Der Verstärkungseinsatz kann in das Stützelement eingeklebt sein.

Die EP 1 052 162 A2 offenbart ein in Längsrichtung verlaufendes Fahrzeugteil mit einem rohrförmigen Teil und einem hierauf aufsitzenden Deckelteil. Ein Zwischenraum zwischen den genannten Teilen ist ausgeschäumt. Die so gebildete Struktur hat bei einem Unfall eine besonders hohe Energieaufnahme bei einer in Längsrichtung einwirkenden Kraft.

Die US 7,392,929 B1 zeigt ein Verfahren zum Verschweißen von Automobilteilen, wobei zunächst ein Material, das einen leitenden Füllstoff enthält, auf das Teil aufgebracht wird, wonach ein Schweißvorgang erfolgt, bei dem das Material teilweise verdrängt wird. Anschließend erfolgt im Zuge eines Härtungsprozesses des Autolacks ein Aushärten des Materials. Dem Material werden versiegelnde, verstärkende und haftungsverbessernde Eigenschaften zugeschrieben.

Die DE 198 27 549 A1 betrifft ein Verfahren zum Herstellen von Fügeflächen zwischen Blechformteilen- Die Bleche werden aufeinandergelegt und punkverschweißt, wobei zwischen den Schweißpunkten Hohlräume zwischen den Verbindungsflächen der Bleche verbleiben. In diesen Hohlräumen ist Dämpfungsmaterial angeordnet, das ggf. nachträglich aufgeschäumt wird.

Gelöst wird diese Aufgabe erfindungsgemäß durch einen eingangs genannten, gattungsgemäßen Träger, bei dem der Träger über wenigstens ein der Längserstreckung des Trägers folgendes Versteifungselement verfügt, das unter Zwischenschaltung einer Trennschicht in Längserstreckung des Trägers form- und/oder stoffschlüssig schub- und zugfest an den die beiden Seitenschenkeln des Trägers verbindenden Boden angeschlossen ist.

Bei diesem Trägerkonzept können herkömmliche Träger, beispielsweise solche aus profiliertem Stahl, verwendet werden, an die zur Erhöhung ihrer Biegesteifigkeit ein der Längserstreckung des Trägers folgendes Versteifungselement angeschlossen ist. Dabei ist vorgesehen, dass zwischen dem Versteifungselement und der Oberfläche des Trägers eine Trennschicht angeordnet ist. Diese Trennschicht beabstandet das Versteifungselement von der Oberfläche des Trägers. Erreicht werden durch dieses Konzept die Ausbildung eines Obergurtes und eines von diesem beabstandeten Untergurtes, wodurch die Biegesteifigkeit vor allem auch in lotrechter Richtung zur Erstreckung des Grundelementes nicht unerheblich vergrößert ist. Dabei ist es zum Verwirklichen der Erfindung unerheblich, wenn der Abstand zwischen dem Versteifungselement und der Oberfläche des Trägers nur gering ist, beispielsweise wenige Zehntelmillimeter beträgt. Der form- und/oder stoffschlüssige Anschluss an den Boden des Trägers kann beispielsweise mittels einer Schweißung, wobei im Abstand vorgenommene Punktschweißungen bevorzugt sind, oder auch durch mechanische Verbindungselemente, wie beispielsweise durch Clinschen oder Nieten erfolgen. Auch beim Clinschen oder Nieten wird der druck- und zugfeste Anschluss des Versteifungselementes an den Träger an voneinander beabstandeten, der Längserstreckung des Versteifungselementes folgenden Verbindungspunkten vorgenommen.

Bei diesem Konzept können herkömmliche Träger als Grundkörper verwendet werden, die in Abhängigkeit von den an sie gestellten Anforderungen etwa hinsichtlich einer Biegesteifigkeit mit einem diesbezüglich konzipierten Versteifungselement zur Ausbildung eines Trägers im Sinne dieser Erfindung aufgerüstet werden. Ein solcher Träger ist somit modular aufgebaut und umfasst den Grundkörper, beispielsweise den herkömmlichen Träger, und zumindest ein Versteifungselement, welches in der vorbeschriebenen Art und Weise an den Träger angeschlossen ist. Zur Ausbildung des Trägers kann somit den jeweiligen Anforderungen entsprechend jeweils ein unterschiedliches Versteifungselement eingesetzt werden. Daher besteht die Möglichkeit, in Abhängigkeit von dem gewünschten Verbindungskonzept auch gegenüber dem Grundkörperstoff materialunterschiedliche Versteifungselemente einzusetzen. Auch bei Einsatz von materialgleichen oder materialähnlichen Versteifungselementen kann die zu erzielende Biegesteifigkeit des Trägers durch Wahl der Breite des Versteifungselementes, der Dicke desselben und/oder auch durch eine Profilierung des Versteifungselementes selbst bereitgestellt werden. Auch die Dicke der Trennschicht kann als Variable in die Konzeption des Trägers eingehen.

Im Ergebnis ist ein solcher Träger gegenüber vorbekannten biegesteifer, wobei nur ein relativ geringes Mehrgewicht in Kauf genommen werden muss. Zudem ist die zusätzliche Versteifung mit einfachen prozesstechnischen Mitteln durchzführen, so dass sich bei einem Einsatz von herkömmlichen Trägern als Grundkörper für den auszubildenden Träger die Mehrkosten in Grenzen halten. Vor allem müssen keine zusätzlichen Kosten in neue Matrizen und Gesenke investiert werden.

Die Trennschicht ist vorzugsweise gleichzeitig eine Korrosionsschutzschicht, um die zueinander weisenden Oberflächen von Versteifungselement und Träger zu schützen. Somit kann ein solcher Träger mit seinem zumindest einen Versteifungselement einem Tauchlackierungsprozess unterworfen werden, wobei sichergestellt ist, dass keine ungeschützten Oberflächenbereiche verbleiben. Dies ist vor allem bei Trägern aus korrosionsgefährdetem Material, wie etwa Stahl, wesentlich.

Das zumindest eine Versteifungselement kann je nach Ausgestaltung des Trägers bzw. seines Grundkörpers an der Innenseite oder an der Außenseite angeschlossen sein. Bevorzugt wird man beispielsweise bei einem U-förmig profilierten Träger als Grundkörper das Versteifungselement als Einleger ausführen und an die Innenseite des die beiden Seitenschenkel verbindenden Bodens anschließen.

Gemäß einer weiteren bevorzugten Ausgestaltung ist die Trennschicht als Klebeschicht ausgeführt, mithin als Schicht, die sowohl adhäsiv und damit kraftschlüssig an der Oberfläche des Grundkörpers als auch an der Oberfläche des Versteifungselementes anhaftet. Als Kleber zum Ausbilden einer solchen Trennschicht eignen sich aufgrund ihrer besonderen Anbindungskräfte solche, die unter Temperatureinwirkung aushärten, beispielsweise ein crashstabiler Strukturklebstoff. Für die Aushärtung des Klebers kann der Erwärmungsschritt genutzt werden, dem ein tauchlackierter Träger zum Aushärten der Tauchlackierung ohnehin unterworfen wird.

Es versteht sich, dass ein solcher Träger Teil einer Fahrzeugkomponente sein kann, die mehrere Träger, insbesondere auch mehrere derartiger Träger aufweist, wie dieses beispielsweise bei einem Getriebeträger der Fall sein kann, wenn dieser als geschlossenes Kastenprofil ausgeführt ist.

Weitere Vorteile und Ausgestaltungen der Erfindung ergeben sich aus der nachfolgenden Beschreibung eines Ausführungsbeispiels unter Bezugnahme auf die beigefügten Figuren. Es zeigen:
- **Fig. 1:**: eine Explosionsdarstellung eines Getriebeträgers,
- **Fig. 2:**: eine perspektivische Darstellung eines Teils des Getriebeträgers der Figur 1,
- **Fig. 3:**: einen Querschnitt durch den Träger der Figur 1 im Zusammenbau,
- **Fig. 4:**: einen vergrößerten Querschnitt durch den strichpunktiert umrissenen Ausschnitt des Trägers der Figur 3 und
- **Fig. 5:**: ein Querschnitt entsprechend demjenigen der Figur 4 an einer zu der Schnittlinie der Figur 4 versetzten Stelle.

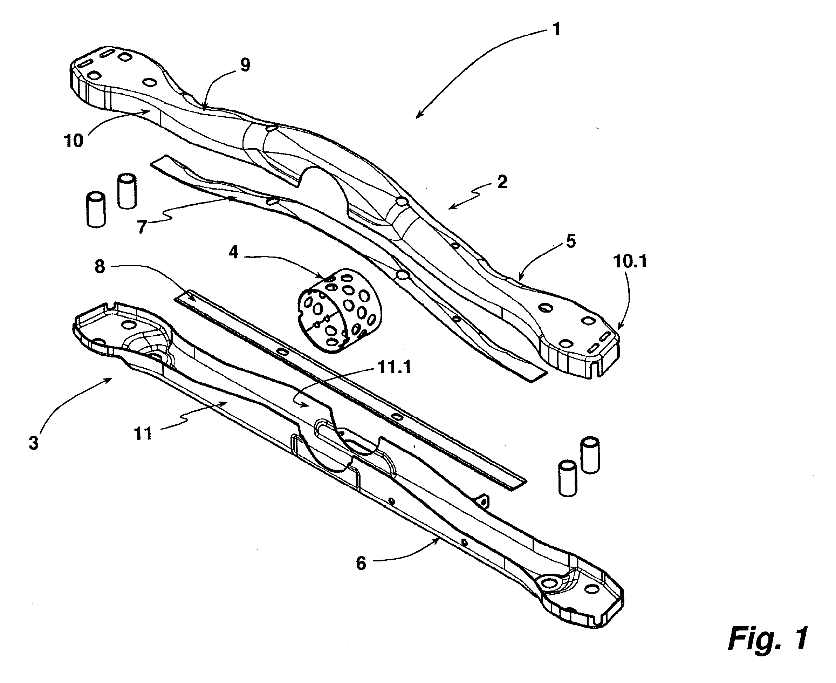

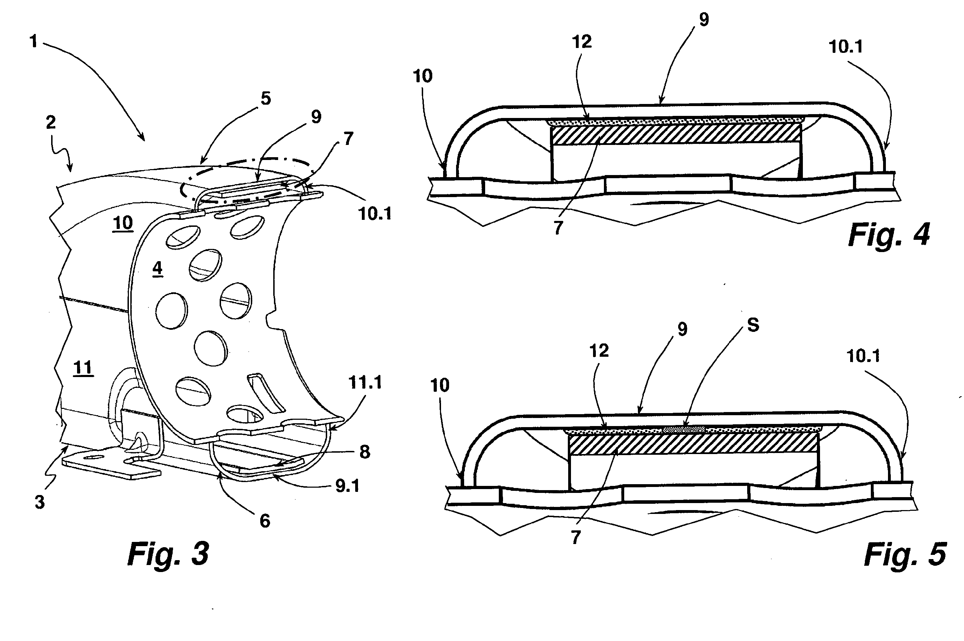

Ein Getriebeträger 1 für ein Kraftfahrzeug umfasst einen ersten Träger 2 und einen zweiten Träger 3. Die Träger 2, 3 sind konzipiert, um eine manschettenartige Getriebeeinfassung 4 aufzunehmen, an der das Getriebe festgelegt wird. Die Träger 2, 3 bestehen jeweils aus einem Grundkörper 5 bzw. 6 und einem zur Erhöhung der Biegesteifigkeit in z-Richtung daran angeschlossenen Einleger 7 bzw. 8 als Versteifungselement. Bei den Grundkörpern 5, 6 handelt es sich um Stahlblechumformteile, und zwar um solche, die herkömmlich zur Herstellung eines Getriebeträgers eingesetzt worden sind. Jeder Grundkörper 5, 6 weist eine Längserstreckung auf, die einem Mehrfachen der Quererstreckung entspricht. In Querrichtung sind die beiden Träger 5, 6 profiliert, und zwar im Querschnitt U-förmig. Die Einleger 7 bzw. 8 sind an die Innenseite des jeweiligen Bodens 9 bzw. 9.1 angeschlossen, und zwar an denjenigen Boden 9 bzw. 9.1, der die gegenüber dem Boden 9 bzw. 9.1 abgekanteten Seitenwänden 10, 10.1 bzw. 11, 11.1 des jeweiligen Grundkörpers 5 bzw. 6 verbindet. Die Kontur des jeweiligen Einlegers 7 bzw. 8 an seiner zu dem Boden 9 bzw. 9.1 weisenden Oberseite folgt der Innenkontur des jeweiligen Grundkörpers 5 bzw. 6. Die Anpassung der zu dem Grundkörper 5 weisenden Seite des Einlegers 7 ist in Figuren 1 und 3 deutlich erkennbar.

In seinem Zusammenbau sind die beiden Grundkörper 5, 6 des Getriebeträgers 1 mit ihren zueinander weisenden Stirnseiten miteinander verschweißt. Der Getriebeträger 1 unterscheidet sich bei dem dargestellten Ausführungsbeispiel äußerlich nicht von einem herkömmlichen.

Die beiden Einleger 7, 8 dienen zur Erhöhung der Biegesteifigkeit. Nachfolgend ist der Anschluss des Einlegers 7 an den Grundkörper 5 zur Ausbildung des ersten Trägers 2 beschrieben. Der Einleger 8 ist in derselben Weise an den Grundkörper 6 angeschlossen.

Der Grundkörper 5 ist ein Stahlblechumformteil. Bei dem Einleger 7 handelt es sich ebenfalls um einen solchen aus Stahl, wobei es sich bei dem Einleger 7 auch um einen gegenüber dem zur Herstellung des Grundkörpers 5 verwendeten Stahl niedrigerer Qualität handeln kann. Somit sind die Materialien zwischen Grundkörper 5 und Einleger 7 materialähnlich und jedenfalls miteinander verschweißbar.

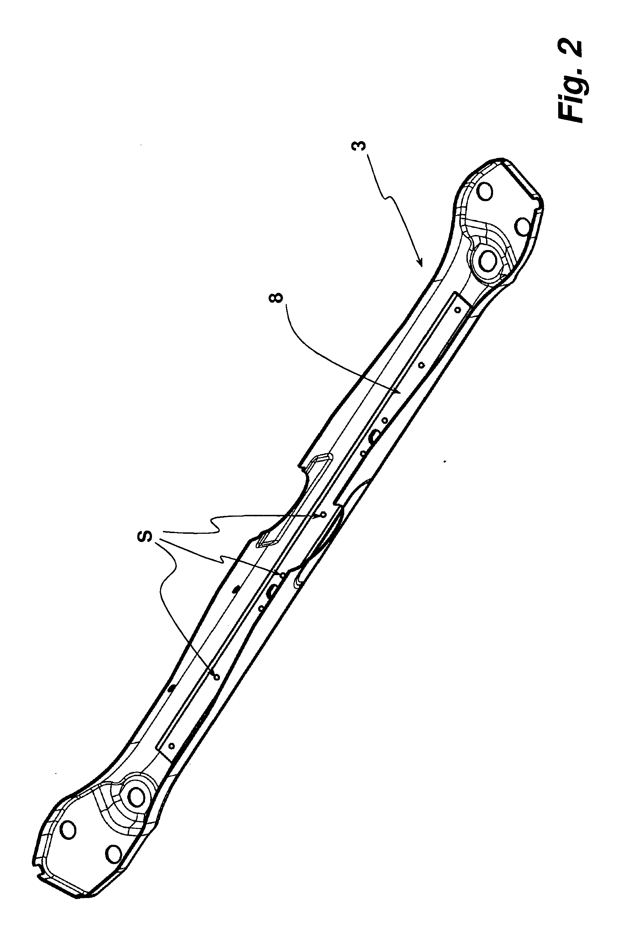

Der Einleger 7 ist unter Zwischenschaltung einer Trennschicht 12 an die Innenseite des Bodens 9 angeschlossen (siehe Figur 4 und 5; in Figur 3 ist die Trennschicht nicht dargestellt). Bei dem dargestellten Ausführungsbeispiel ist die Trennschicht 12 als Klebeschicht ausgeführt. Die Klebeschicht 12 erstreckt sich über die gesamte zu dem Boden 9 weisende Oberfläche des Einlegers 7. Wie aus Figuren 3 und 4 erkennbar, ist der Einleger 7 durch die Klebeschicht 12 von dem Boden 9 des Grundkörpers 5 beabstandet. Bei der Klebeschicht 12 handelt es sich um eine solche, die unter Temperatureinwirkung von etwa 200°C ausgehärtet ist. Schub- und zugfest ist der Einleger 7 an den Grundkörper 5 durch mehrere Schweißpunkte verbunden. Dieses ist beispielhaft hinsichtlich des Einlegers 8, der in den Grundkörper 6 eingelegt und mit diesem Verschweißt ist in Figur 2 erkennbar. Die Schweißpunkte sind darin mit den Bezugszeichen S gekennzeichnet. Der Einleger 7 ist in der gleichen Art und Weise an dem Grundkörper 5 befestigt. Über die Längserstreckung des Einlegers 7 ist dieser bei dem dargestellten Ausführungsbeispiel mit neun, in etwa gleichem Abstand zueinander angeordneten Schweißpunkten mit dem Grundkörper 5 bzw. dessen Boden 9 stoffschlüssig verbunden. Figur 5 zeigt einen Schnitt durch den Grundkörper 5 mit dem darin angeordneten Einleger 7 zur Ausbildung des ersten Trägers 2 im Bereich einer solchen Schweißpunktverbindung.

Durch die Trennschicht 12 ist der Einleger 7 in einem über seine Länge gleich bleibenden Abstand zu dem Boden 9 des Grundkörpers 5 angeordnet. Zugleich dient diese Schicht 12 als Korrosionsschutzschicht. Die Trennschicht 12 ist ausgeführt, damit kein Spalt zwischen Boden 9 und dem Einleger 7 verbleibt.

Zum Anschließen des Einlegers 7 an den Grundkörper 5 zum Ausbilden des ersten Trägers 2 wird auf die zum Boden 9 des Grundkörpers 5 weisende Oberseite des Einlegers 7 eine Klebemasseraupe mittig über die gesamte Länge des Einlegers 7 hinweg aufgetragen. Anschließend wird der Einleger innerhalb des Grundkörpers 5 positioniert, so dass anschließend die Punktschweißung zum punktuellen stoffflüssigen Anschließen des Einlegeres 7 an den Grundkörper 5 vorgenommen werden kann. Die Punktschweißung erfolgt ebenfalls mittig in Bezug auf die Breite des Einlegers 7. Um den notwendigen Schweißstrom von dem Boden 9 des Grundkörpers 5 auf den Einleger 7 oder umgekehrt übertragen zu können, ist bei der in den Figuren dargestellten Ausgestaltung die Klebemasse elektrisch leitend. Im Zuge des Schweißvorganges oder auch durch eine Vorpositionierung der stoffflüssig zu verbindenden Teile miteinander wird unter Annäherung des Einlegers 7 an die Innenseite des Bodens 9 die Klebemasseraupe auseinandergedrückt, so dass sich diese über die gesamte zum Boden 9 weisende Oberseite des Einlegers 7 verteilt. Die Klebemittelraupe ist vorzugsweise so bemessen, dass nicht zuviel überschüssiges Klebematerial aus dem Abstandsspalt zwischen dem Einleger 7 und dem Boden 9 hervorquillt.

Nachdem beide Träger 2, 3 in der vorbeschriebenen Weise hergestellt worden sind, werden diese - wie herkömmlich - auch an den zueinander weisenden Stirnseiten ihrer Seitenwände 10, 10.1, 11, 11.1 miteinander verschweißt. In einem nachfolgenden Schritt wird der auf diese Weise erstellte Getriebeträger 1 einem Tauchlackierprozess unterworfen und anschließend einer Wärmebehandlung unterzogen, um den Lack und die bislang nicht ausgehärtete Klebemasse auszuhärten.

In gleicher Weise, wie dieses zu dem Getriebeträger 1 beschrieben worden ist, können auch andere Fahrzeugträgerkomponenten versteift werden, beispielsweise Querlenker oder dergleichen. Es versteht sich, dass in Abhängigkeit von dem gewünschten Maß einer Versteifung auch bei einem Getriebeträger nur einer der beiden Grundkörper als Träger, wie beansprucht, ausgeführt sein kann, wie dieses vorbeschrieben ist.

Das vorbeschriebene Konzept und die beispielhafte Ausgestaltung durch Anschließen der Einleger mittels Schweißpunktverbindungen an den jeweiligen Grundkörper ist bei unterschiedlichsten Geometrien des Grundkörpers bzw. des Einlegers möglich. Zudem ist bei der beschriebenen Punktschweißung von Vorteil, dass die Grundkörper sich hierbei nicht verziehen. Daher ist ein Richten der Träger 2 oder 3 nicht erforderlich.

Untersuchungen haben gezeigt, dass eine nennenswerte Erhöhung der Biegesteifigkeit in z-Richtung bei einem Träger bereits eintritt, wenn der Einleger schub- und zugfest schubfest form- oder stoffschlüssig an den Grundkörper angeschlossen ist, also: Wenn die Trennschicht nicht als Klebeschicht ausgeführt ist. Gleichwohl lässt sich eine nicht unbeträchtliche Steigerung der Biegesteifigkeit erreichen, wenn die Trennschicht als Klebeschicht ausgeführt ist.

### Bezugszeichenliste

- 1: Getriebeträger
- 2: erster Träger
- 3: zweiter Träger
- 4: Getriebeeinfassung
- 5: Grundkörper
- 6: Grundkörper
- 7: Einleger
- 8: Einleger
- 9, 9.1: Boden
- 10, 10.1: Seitenwand
- 11, 11.1: Seitenwand
- 12: Trennschicht

- S: Schweißpunkt

## Patentansprüche

1. Träger als Fahrzeugkomponente mit einer Längserstreckung, die einem Mehrfachen seiner Quererstreckung entspricht, und mit einer den Träger (2, 3) versteifenden Querprofilierung, durch die der Träger (2, 3) eine im Wesentlichen U-förmige Querschnittsgeometrie aufweist, **dadurch gekennzeichnet, dass** der Träger (2, 3) über wenigstens ein der Längserstreckung des Trägers (2, 3) folgendes Versteifungselement (7, 8) verfügt, das unter Zwischenschaltung einer Trennschicht (12) in Längserstreckung des Trägers (2, 3) form- und/oder stoffschlüssig schub- und zugfest an den die beiden Seitenschenkeln (10, 10.1; 11, 11.1) des Trägers (2, 3) verbindenden Boden (9, 9.1) angeschlossen ist.

2. Träger nach Anspruch 1, **dadurch gekennzeichnet, dass** das Versteifungselement als Einleger (7, 8) ausgeführt ist und an der Innenseite des Bodens (9, 9.1) des Trägers (2, 3) angeschlossen ist.

3. Träger nach einem der Ansprüche 1 oder 2, **dadurch gekennzeichnet, dass** das Versteifungselement (7) eine Querprofilierung aufweist.

4. Träger nach einem der Ansprüche 1 bis 3, **dadurch gekennzeichnet, dass** der Träger (2, 3) aus einem ersten schweißbaren Material und das Versteifungselement (7, 8) aus einem mit dem ersten Material verschweißbaren zweiten Material besteht, und das Versteifungselement (7, 8) durch mehrere als Punktschweißung ausgeführte Schweißstellen stoffschlüssig mit dem Träger (2, 3) verbunden ist.

5. Träger nach Anspruch 4, **dadurch gekennzeichnet, dass** der Träger (2, 3) aus einem ersten metallischen Werkstoff, insbesondere aus Stahl und das Versteifungselement (7, 8) aus demselben oder einem anderen, mit dem ersten Werkstoff verschweißbaren Metallwerkstoff, insbesondere Stahl besteht.

6. Träger nach einem der Ansprüche 1 bis 5, **dadurch gekennzeichnet, dass** sich die Trennschicht (12) über die gesamte, für den Anschluss des Versteifungselementes (7, 8) an den Träger (2, 3) nicht benötigte, zu dem Träger (2, 3) weisende Oberfläche des Versteifungselementes (7, 8) erstreckt.

7. Träger nach Anspruch 6, **dadurch gekennzeichnet, dass** der durch die Trennschicht (12) bedingte Abstand von Versteifungselement (7, 8) und Träger (2, 3) über die Längserstreckung des Versteifungselementes (7, 8) außerhalb der Anschlussstellen zwischen Versteifungselement (7, 8) und Träger (2, 3) zumindest weitestgehend konstant ist.

8. Träger nach Anspruch 6 oder 7, **dadurch gekennzeichnet, dass** die Trennschicht (12) als Klebeschicht ausgeführt ist.

9. Träger nach Anspruch 8, **dadurch gekennzeichnet, dass** die Klebeschicht eine solche ist, die unter Temperatureinwirkung ausgehärtet ist.

10. Träger nach einem der Ansprüche 1 bis 9, **dadurch gekennzeichnet, dass** der Träger (2, 3) Teil einer zumindest einen weiteren Träger umfassenden Fahrzeugkomponente, etwa eines Getriebeträgers (1) ist.

11. Träger nach Anspruch 10, **dadurch gekennzeichnet, dass** der zumindest eine weitere Träger ebenfalls ein Träger nach einem der Ansprüche 1 bis 10 ist.

## Claims

1. A support used as a vehicle component and having a longitudinal extension which is a multiple of the transverse extension thereof, and having a transverse profile section which reinforces the support (2, 3) and whereby the support (2, 3) exhibits an essentially U-shaped cross-sectional geometry, **characterised in that** the support (2, 3) comprises at least one reinforcing element (7, 8) which follows the longitudinal extension of the support (2, 3) and which by the interposition of a separation layer (12) in the longitudinal extension of the support (2, 3) is attached tension-resistantly and shear-resistantly by a positive fit and/or material bond to the base (9, 9.1) connecting the two legs (10, 10.1; 11, 11.1) of the support (2, 3).

2. The support of claim 1 **characterised in that** the reinforcing element is executed as a rib (7, 8) and is attached to the inside of the base (9, 9.1) of the support (2, 3).

3. The support of either of claims 1 or 2 **characterised in that** the reinforcing element (7) exhibits a transverse profile section.

4. The support of any one of claims 1 to 3 **characterised in that** the support (2, 3) consists of a first weldable material and the reinforcing element (7, 8) consists of a second material that is weldable to the first material, and the reinforcing element (7, 8) is connected through material bond to the support (2, 3) by a plurality of welds executed as spot welds.

5. The support of claim 4 **characterised in that** the support (2, 3) consists of a first metal material, in particular steel, and the reinforcing element (7, 8) consists of the same or of another metal material which can be welded to the first material, in particular steel.

6. The support of any one of claims 1 to 5 **characterised in that** the separation layer (12) extends over that entire surface area of the reinforcing element (7, 8) which is not needed for attaching the reinforcing element (7, 8) to the support (2, 3) and which faces the support (2, 3).

7. The support of claim 6 **characterised in that** the spacing between reinforcing element (7, 8) and support (2, 3) that is due to the separation layer (12) is, generally at least, constant over the longitudinal extension of the reinforcing element (7, 8) outside the connection points between reinforcing element (7, 8) and support (2, 3).

8. The support of claim 6 or 7 **characterised in that** the separation layer (12) is executed as an adhesive layer.

9. The support of claim 8 **characterised in that** the adhesive layer is one which is hardened under the effect of temperature.

10. The support of any one of claims 1 to 9 **characterised in that** the support (2, 3) is part of a vehicle component, such as a transmission support (1), comprising at least one further support.

11. The support of claim 10 **characterised in that** the at least one further support is also a support of any one of claims 1 to 10.

## Revendications

1. Longeron servant de composant de véhicule muni d'une étendue longitudinale laquelle correspond à un multiple de son étendue transversale et muni d'un profilage transversal rigidifiant le longeron (2, 3), par lequel le longeron (2, 3) présente une géométrie de section transversale sensiblement en forme de U, **caractérisé en ce que** le longeron (2, 3) dispose d'au moins un élément de rigidification (7, 8) suivant l'étendue longitudinale du longeron (2, 3), qui est, par l'intermédiaire d'une couche de séparation (12), dans le sens de l'étendue longitudinale du longeron (2, 3), raccordé par complémentarité de forme et/ou de matière, de façon résistante à la poussée et à la traction, à la base (9, 9.1) qui relie les deux montants latéraux (10, 10.1 ; 11, 11.1) du longeron (2, 3).

2. Longeron selon la revendication 1, **caractérisé en ce que** l'élément de rigidification est conformé en pièce d'insertion (7, 9) et est raccordé sur la face interne de la base (9, 9.1) du longeron (2, 3).

3. Longeron selon l'une des revendications 1 ou 2, **caractérisé en ce que** l'élément de rigidification (7) présente un profilage transversal.

4. Longeron selon l'une des revendications 1 à 3, **caractérisé en ce que** le longeron (2, 3) est constitué d'un premier matériau soudable et que l'élément de rigidification (7, 9) est constitué d'un second matériau qui peut être soudé avec le premier matériau et que l'élément de rigidification (7, 9) est relié avec le longeron (2, 3) par complémentarité de matière à travers plusieurs zones de soudage réalisées sous forme de soudures par point.

5. Longeron selon la revendication 4, **caractérisé en ce que** le longeron (2, 3) est constitué d'un premier matériau métallique, notamment d'acier et que l'élément de rigidification (7, 8) est constitué du même matériau ou d'un autre, notamment d'acier, qui peut être soudé au premier matériau.

6. Longeron selon l'une des revendications 1 à 5, **caractérisé en ce que** la couche de séparation (12) s'étend sur toute la surface de l'élément de rigidification (7, 8) orientée vers le longeron (2, 3), non nécessaire pour raccorder l'élément de rigidification (7, 8) au longeron (2, 3).

7. Longeron selon la revendication 6, **caractérisé en ce que** l'intervalle entre l'élément de rigidification (7, 8) et le longeron (2, 3) imposé par la couche de séparation (2, 3) reste au moins très largement constant sur l'étendue longitudinale de l'élément de rigidification (7, 8) en dehors des zones de raccordement entre l'élément de rigidification (7, 8) et le longeron (2, 3).

8. Longeron selon la revendication 6 ou 7, **caractérisé en ce que** la couche de séparation (12) est réalisée en tant que couche de collage.

9. Longeron selon la revendication 8, **caractérisé en ce que** la couche de collage est une couche durcie sous l'effet de la température.

10. Longeron selon l'une des revendications 1 à 9, **caractérisé en ce que** le longeron (2, 3) fait partie d'un composant de véhicule comprenant au moins un autre élément porteur, par exemple un support d'engrenages (1).

11. Longeron selon la revendication 10, **caractérisé en ce que** l'au moins un autre élément porteur est également un longeron selon l'une des revendications 1 à 10.
